# EUROPÄISCHE PATENTANMELDUNG

(11) **EP 3 772 647 A1**
(43) Veröffentlichungstag der Anmeldung: **10.02.2021**
(21) Anmeldenummer: 19190948.0
(22) Anmeldetag: 09.08.2019
(51) Int. Cl.: G01N 29/07, G01N 29/24

(54) **SYSTEM ZUR ZERSTÖRUNGSFREIEN ZUSTANDSÜBERWACHUNG VON METALLISCHEN BAUWERKEN**

(71) Anmelder: Kurotec - KTS Kunststofftechnik GmbH, 21682 Stade (DE)
(72) Erfinder: MÜGGENBURG, Mathias, 21682 Stade (DE)
(74) Vertreter: Grünecker Patent- und Rechtsanwälte PartG mbB

(57) **Zusammenfassung**

Die vorliegende Erfindung betrifft ein System zur zerstörungsfreien Prüfung einer Probe unter Einsatz einer Kombination an intelligenten Sensoren und Funkeinheiten, die eine kontinuierliche Überwachung ermöglichen, unter Bereitstellung von Daten, die durch zerstörungsfreie Prüfung erhalten werden. Korrespondierend dazu stellt die vorliegende Erfindung auch ein Verfahren zur zerstörungsfreien Prüfung einer Probe unter Einsatz einer Kombination an intelligenten Sensoren und Funkeinheiten, die eine kontinuierliche Überwachung ermöglichen, unter Bereitstellung von Daten, die durch zerstörungsfreie Prüfung erhalten werden, zur Verfügung.

## Beschreibung

### Technisches Gebiet

Die vorliegende Erfindung betrifft ein System zur zerstörungsfreien Prüfung einer Probe unter Einsatz einer Kombination an Sensoren und Funkeinheiten, die eine kontinuierliche Überwachung ermöglichen, unter Bereitstellung von Daten, die durch zerstörungsfreie Prüfung erhalten werden. Korrespondierend dazu stellt die vorliegende Erfindung auch ein Verfahren zur zerstörungsfreien Prüfung einer Probe unter Einsatz einer Kombination an Sensoren und Funkeinheiten, die eine kontinuierliche Überwachung ermöglichen, unter Bereitstellung von Daten, die durch zerstörungsfreie Prüfung erhalten werden, zur Verfügung.

### Stand der Technik

Metallische Hohlkörper, wie Rohre oder Reaktoren werden weit verbreitet in der chemischen Industrie eingesetzt. Häufig sind die darin zu transportierenden Materialien bzw. die darin durchzuführenden Reaktionen dergestalt, das eine kontinuierliche Strukturüberwachung notwendig ist, um sicherzustellen, dass beispielsweise Ablagerungen im Inneren die Funktionalität nicht beeinträchtigen, wie den Transport von Materialien oder auch die Wärmeleitung. Ebenfalls ist es relevant mögliche Verringerungen der Wandstärken, beispielsweise bei Stahlrohren, die zur Förderung stark korrodierender oder abrasiver Materialien eingesetzt werden, rechtzeitig zu entdecken. Manuelle Überwachungsprozesse sind dabei personal-, zeit- und kostenaufwändig, da für eine ausreichend genaue Prüfung häufig die zu überwachenden Anlagen u.a. abgeschaltet und teilweise entleert werden müssen oder Messgeräte installiert werden müssen (aufwändige konventionelle Überwachungsmethoden sind beispielweise externe visuelle Überwachung, endoskopische Kamerainspektion, Überwachung mit Röntgenstrahlen). Erst dann kann die Prüfung erfolgen, die häufig auch nicht zerstörungsfrei verlaufen kann, da zur Überprüfung ggf. Probenstücke aus einer Anlage entfernt und dann analysiert werden. Durch derartige Überwachungs- und Prüfungsverläufe ist es darüber hinaus schwierig im laufenden Betrieb sicher abzuschätzen, wann ein Bauteil einer Anlage ausgetauscht werden muss oder beispielsweise Ablagerungen im Inneren entfernt werden müssen. Diese Unsicherheit führt zu hohen Kosten, da einerseits Teile früher ausgetauscht werden als notwendig (um die Anlagensicherheit zu gewährleisten) und andererseits die manuellen Prüfungen in kürzeren Intervallen erfolgen. Eine weitere besondere Anforderung im Hinblick auf eine mögliche automatische Überwachung ist, dass es erforderlich sein kann, dass die eingesetzten Sensoren über ein System der Eigenzertifizierung und Störungsprüfung verfügen müssen. Ein derartiges System würde es erlauben auch ohne manuellen Eingriff die Meßgenauigkeit und Störungsfreiheit des Sensors zu überprüfen, die Zuverlässigkeit der Meßergebnisse soweit sicherzustellen, dass beispielsweise trotz der nicht mehr erforderlichen manuellen Überprüfung eine Zertifizierung möglich wird. Weiterhin ist es aus arbeitssicherheitstechnischen Gründen wichtig, Mitarbeiter von Arbeiten/Anwesenheit in kritischen Bereichen so weit es geht zu entlasten.

Im Bereich der Strukturüberwachung (im folgenden auch structural health monitoring / SHM) sind inzwischen zerstörungsfreie Techniken entwickelt worden, beispielsweise im Bereich Flugzeugbau Die zerstörungsfreie Prüfung ermöglicht das Erkennen verschiedener Arten und Größen von Defekten und darüber das Bestimmen der Materialeigenschaften. Herkömmliche Techniken der zerstörungsfreien Prüfung von Proben, wie etwa faserverstärkte Kunststoffe, umfassen Ultraschall- und Thermografieprüfungen. Bei der im Impuls-Echo-Modus durchgeführten zerstörungsfreien Prüfung durch Ultraschall durchläuft beispielsweise ein Impuls die Probe und wird von der gegenüberliegenden Oberfläche der Probe reflektiert. Defekte innerhalb der Probe reflektieren, absorbieren oder zerstreuen den Impuls derart, dass ein Impuls-Echo von der gegenüberliegenden Probenoberfläche der Probe verringert wird. Problematisch bei derartigen Strukturen sind die Schadensreaktion und die Schadensüberwachung. Es sind in diesem Zusammenhang SHM-Methoden bekannt, bei denen mit gesondert eingesetzten Elementen Messsignale erfasst werden. Eine derartige Signalerfassung erfolgt sowohl an ruhenden Strukturen als auch sich im Einsatz befindlichen Strukturen.

Weiterhin bekannt ist auch der Einsatz von Ultraschallprüfköpfen bei denen das Signal durch eine Piezokeramik erzeugt wird. Diese Systeme, obwohl sie an einer Vielzahl an Substraten funktionieren, haben den Nachteil, dass ihre Installation formschlüssig mit dem Substrat erfolgen muss, mit genau definiertem Abstand Prüfkopfoberfläche und Substratoberfläche und auch einer definierten Kontaktfläche (ggf. in Form einer Zwischenlage, bei der Dicke und Material genau definiert sein müssen), um exakte Meßwerte zu liefern.

### Aufgabe der Erfindung

Aufgrund der Relevanz von derartigen Strukturüberwachungen beispielsweise bei Rohren und Reaktoren aus Stahl oder Rohren, Reaktoren und anderen Bauwerken aus Stahl oder anderen ferromagnetischen Materialien, die z.B. in der chemischen Industrie weitverbreitet eingesetzt werden, werden verbesserte Systeme zum SHM nachgefragt. Häufig werden in derartigen Rohren und Reaktoren stark korrodierende und/oder giftige Zusammensetzungen transportiert und umgesetzt, so dass eine genaue Überwachung der Strukturintegrität wichtig ist, um Schadensfälle zu vermeiden. Eine besondere Herausforderung ist dabei auch darin zu sehen, dass metallische Elemente nicht optisch von außen überwacht werden können. Gelichzeitig können beispielsweise bei Raffinerien, die Umgebungstemperaturen, also die Temperaturen in der Nähe der zu überwachenden Strukturen derart sein, dass eine individuelle Prüfung während des Betriebs durch Menschen unmöglich ist.

Daher ist es die Aufgabe der vorliegenden Erfindung ein System und Verfahren zur Strukturüberwachung anzugeben, welches zerstörungsfrei die Strukturintegrität in derartigen Anlagen bzw. an derartigen Bauteilen überwacht und die dabei ermittelten Daten an eine zentrale Datenverarbeitungseinheit übermittelt, so dass eine automatische und kontinuierliche Erfassung und Auswertung möglich wird.

### Kurze Beschreibung der Erfindung

Das erfindungsgemäße System zur zerstörungsfreien Zustandsüberwachung umfasst daher die in Anspruch 1 definierten Komponenten. Bevorzugte Ausgestaltungen sind in den abhängigen Ansprüchen angegeben. Der Fachmann wird auf der Grundlage der nachfolgenden Beschreibung, die zusätzlichen bevorzugte Ausführungsformen enthält, nachvollziehen, dass die vorliegende Erfindung nicht auf die konkret beschriebenen Merkmalskombinationen festgelegt ist sondern sich für den Fachmann weitere Kombinationen und Ausgestaltungen ergeben, die hier mit umfasst und geschützt sind.

### Detaillierte Beschreibung der Erfindung

Das erfindungsgemäße System umfasst mindestens ein Bauwerk, wie einen Hohlkörper (Rohr, Leitung, Reaktor) oder Ähnliches, der aus einem ferromagnetischem metallischen Werkstoff, wie nichtrostenden Stählen oder ferromagnetischen Edelstählen hergestellt ist. Dies ist das Bauteil, das überwacht werden soll (nachfolgend auch als Substrat bezeichnet). Dabei kann die Überwachung an Wandstücken aber auch an Verbindungsstücken, wie insbesondere Schweißnähten erfolgen. Dieser Hohlkörper ist weiterhin mit einem Sensor, nachfolgend definiert, ausgerüstet, der formschlüssig mit der zu überwachenden Struktur verbunden ist oder der Sensor ist zumindest in der Nähe des zu überwachenden Bauwerks und/oder Hohlkörper vorgesehen. Der Begriff "in der Nähe" soll hier so verstanden werden, dass es möglich ist, zwischen Sensor und Prüfkörper (Bauwerk, wie Rohr etc.) einen Abstand zu lassen. Dies vereinfacht insbesondere die Anbringung, da nicht zwangsläufig ein formschlüssiger Verbund notwendig ist (der ggf. durch Alterungserscheinungen ja auch im Laufe der Zeit gestört werden kann). Gleichzeitig ist durch die Natur des einzusetzenden Sensors, der nachfolgend beschrieben wird, auch eine einfache Befestigung ohne weiteren Aufwand am zu überwachenden Bauteil möglich. Dadurch, dass der Sensor selbst als ein wesentliches Merkmal einen Permanentmagneten umfasst, kann er einfach auf dem zu überwachenden ferromagnetischen Substrat angebracht werden. Solange keine starken Vibrationen etc. im Betrieb des Bauteils auftreten, reicht diese "plug & play"- Anbringung häufig auch für Langzeitüberwachungen aus.

Beispiele zu überwachender Bauwerke (Hohlkörper, Reaktoren etc.) sind Anlagen in der chemischen Industrie, Raffinerien, Pipelines, Offshore-Strukturen, wie Öl-Plattformen, oder andere Plattformen, Pumpstationen, etc., aber auch Bauwerke/Anlagen aus der Lebensmittel- und Getränkeindustrie. Relevant für den Einsatz ist das vorliegen der zuvor beschriebenen Hohlkörper, also Reaktoren, Rohre etc. Diese können oberirdisch, unterirdisch oder aber auch unter Wasser vorliegen. Es ist ein Vorteil der vorliegenden Erfindung, dass beispielsweise auch im Erdreich versenkte Bauwerke überwacht werden können, ohne dass Erdarbeiten notwendig sind.

Der erfindungsgemäß eingesetzte (intelligente) Sensor ist ein Ultraschall-Sensor vom EMAT (Electromagnetic Acoustic Transducer) Typ und umfasst insbesondere einen Prüfkopf mit einem Permanenttmagneten und einer Wechselstrominduktionsspule zur Erzeugung der Ultraschallwellen, und eine Controller Unit. Mit diesem Sensor wird eine Dickenmessung bzw. eine Fehlstellenmessung (also Fehler im inneren des Materials des Hohlkörpers) am Hohlkörper durchgeführt. Die Ultraschallmesstechnik ist dabei eine Laufzeitmessung am Hohlkörper (auch Probenkörper genannt). In bekannter Art und Weise kann, unter Berücksichtigung der Temperaturabhängigkeit der Messung (dies kann durch geeignete Korrekturverfahren rechnerisch berücksichtigt werden) aus der bestimmten Laufzeit des Signals eine Dicke/Wandstärke berechnet/bestimmt werden. Auch ist es möglich Fehler innerhalb des Materials des Prüfkörpers aufzufinden. Da für jeden Meßpunkt die ursprüngliche Wandstärke bekannt ist (bzw. bestimmt werden kann, bevor der Sensor angebracht wird), kann durch die regelmäßig erfolgenden Messungen eine Veränderung sicher detektiert werden. Das erfindungsgemäße System kann Messungen bei Anlagen über einen weiten Temperaturbereich durchführen, wie von -40°C bis 650 °C. Ein bevorzugter Temperaturbereich liegt bei 20°C bis 450°C, insbesondere 50°C bis 320 °C, wie von 70°C bis 300°C.

Erfindungsgemäß wird die Zeit ermittelt, die der Ultraschallimpuls benötigt, um den Probenkörper zu durchlaufen. Da sowohl die Materialzusammensetzung (also beispielsweise Legierungszusammensetzung und die jeweiligen Materialkonstanten) des Probenkörpers als auch der Zustand des Probenkörpers vor Einbau in das Bauwerk bekannt sind (wie Wandstärke, Durchmesser Innen wie Außen) können Abweichungen von diesem Zustand durch eine derartige Laufzeitmessung erfasst werden. Der erfindungsgemäß eingesetzte Sensor erlaubt auch die Überwachung der Integrität von Fügestellen, wie Schweißnähten, da auch Rißbildungen erkannt werden. Da der Sensor auch einen Temperatursensor umfasst, kann durch das erfindungsgemäß eingesetzte Sensorsystem auch noch die jeweilige Temperatur erfasst werden, was wiederum eine sehr genaue Bestimmung der Wandstärke (oder Bestimmung des Auftretens von Störungen) ermöglicht. Durch entsprechende Berücksichtigung der Materialeigenschaften und der erfassten Variablen kann die hier beschriebene Auswerteeinheit eine exakte Berechnung durchführen, da insbesondere Korrekturen aufgrund von Temperatureinflüssen genau berücksichtigt werden können. Es ist also mit ausgezeichneter Genauigkeit möglich z.B. eine Verringerung der Wandstärke, durch Abrasion oder Korrosion zu erfassen. Derartige Abweichungen vom Soll-Zustand können durch das erfindungsgemäße System mit hoher Genauigkeit erfasst werden. Vorteilhaft ist dabei, dass einseitige Zugänglichkeit für eine Strukturüberwachung völlig hinreichend ist.

Sollen zusätzlich zur Überwachung der ferromagnetischen Bauteile beispielsweise auch Ablagerungen (die in den überwiegenden Fällen ja nicht ferromagnetisch sind) im Inneren von Rohren erfasst werden, ist zusätzlich ein konventioneller Ultraschallsensor zur Laufzeitmessung erforderlich. Durch Kopplung der Auswertung kann dabei auf den bei konventionellen Ultraschallsensoren notwendigen zusätzlichen Temperaturfühler verzichtet werden (da der EMAT-Prüfkopf die Temperatur ja mit erfasst).

Die erfindungsgemäß einzusetzenden EMAT Sensoren können erfindungsgemäß formschlüssig mit dem zu überwachenden Bauteil gefügt, wobei dies bereits bei der Konstruktion des Bauteils erfolgen kann. Allerdings ist auch eine Nachrüstung bereits installierter Bauteile möglich. Als geeignet hat sich hierbei eine feste Verbindung, wie unter Einsatz von Kleinvorrichtungen, (Metall)-Bändern oder Klemmen, ggf. auch Verschweißung erwiesen. Es ist aber auch möglich derartigen Sensoren mit den zu überwachenden Probenkörpern zu verkleben, beispielsweise unter Einsatz von Epoxyd-Materialien. Ein Vorteil des Einsatzes eines Sensors vom EMAT Typ ist allerdings, dass eine derartige formschlüssige Verbindung nicht zwingend notwendig ist. Es ist für ein funktionieren des Sensors ausreichend, wenn der Sensor in der Nähe des zu überwachenden Bauteils vorgesehen ist. Bevorzugt beträgt dabei der Abstand zwischen Sensoroberfläche und Bauteil 10 mm oder weniger, bevorzugt 5mm oder weniger. Wie bereits vorstehend beschrieben kann der EMAT-Prüfkopf auch in vielen Fällen einfach durch seinen Permanentmagneten am Bauteil befestigt werden. Da der Sensor vom EMAT Typ auch völlig unabhängig von Oberflächenbeschaffenheit (wie Lackierung, Umwickelung mit Kunststoffmaterialien, ölige oder rußige Ablagerungen etc.) arbeitet und auch kein Kopplungsmittel, wie Wasser, notwendig ist, können derartige Sensoren einfacher eingesetzt werde, im Vergleich zu Ultraschallsensoren die mit Piezokeramiken arbeiten (da bei diesen die Oberflächenbeschaffenheit einen großen Einfluss haben kann).

Die Prüfkopfgeometrie kann in Abhängigkeit von den zu überwachenden Prüfkörpern ausgewählt werden. In einer Ausführungsform der vorliegenden Erfindung können auch Fügestellen, wie Schweißnähte einem Monitoring in Übereinstimmung mit dem Prinzip der vorliegenden Erfindung unterworfen werden. Hier kann die im Rahmen der Offenbarung beschriebene Wandstärkenbestimmung oder Dickenbestimmung aufgefasst werden als Überwachung der Integrität der Fügestelle/Schweißnaht (ob also die Schweißnaht intakt und ohne Störstellen oder Fehlern ist, da mit dem erfindungsgemäß einzusetzenden Sensor eben auch Rissbildungen erkannt werden).

Ein Problem bei konventionellen Überwachung mit Piezo-basierten Sensoren ist es, dass es bei Messergebnissen, die eine Abweichung der Wandstärke angeben, keine letzte Sicherheit gibt, dass diese Messergebnisse tatsächlich korrekt sind. Auch ist es mit derartigen konventionellen Ultraschallsystemen häufig problematisch Rohre etc. mit recht geringen Wandstärken, beispielsweise von 2 mm oder weniger sicher zu überwachen.

Diese Probleme treten beim Einsatz eines Prüfkopfs/Sensors vom EMAT Typ nicht auf. Sensoren vom EMAT Typ können daher direkt und ohne weiteres auch bei derartigen Einsatzbereichen verwendet werden.

Gleichzeitig ist beim Einsatz von EMAT-Sensoren auch eine Selbstzertifizierung während der Messung, auch über einen längeren Zeitraum möglich. Da die Basisdaten der Induktionsspule kontinuierlich überwacht bzw. erfasst werden können, ist im laufenden Betrieb durch den Abgleich mit dem SOLL-Zustand (also erfasste Daten vor dem Einsatz, Kalibrierung vor dem Start) ein kontinuierlicher Vergleich möglich. Dies vereinfacht weiter die kontinuierliche Langzeitüberwachung von Substraten.

Der Sensor kann also durch Einsatz geeigneter Ultraschall-Impulse Daten erfassen, die Rückschlüsse auf den Zustand des Probenkörpers erlauben. Möglich ist dabei der Einsatz von Ultraschallimpulsen über das gesamte Ultraschallfrequenzfenster. Bevorzugt ist dabei der Bereich von 4 bis 8 MHz, beispielsweise 5, 6, oder auch 7 MHz. Durch Abstimmung mit den genauen Spezifikationen des Probenkörpers (Materialzusammensetzung, Wandstärken etc.) können so optimale Messbereiche, abgestimmt auf den konkreten Einzelfall einfach eingestellt werden. Abrasterung mit den Wellen erlaubt so die kontinuierliche Zustandsüberwachung und ggf. auch bereits die Charakterisierung lokaler Defekte. Das Verfahren eignet sich, um den Effekt dieser Defekte auf die Ermüdungsmechanismen während der zyklischen Belastung im laufenden Betrieb zerstörungsfrei zu verfolgen. Darüber können Daten generiert werden, die zur Bewertung des Probenkörpers bzw. dessen Eignung zur Aufrechterhaltung der gewünschten Funktionalität, der statischen Belastung und der dynamischen Belastung herangezogen werden können (in Ausführungsformen kann diese Bewertung quasi in Echtzeit erfolgen).

Die Datenauswertung erfolgt dann beispielsweise auf Grundlage von aus der Ultraschallmaterialprüfung bekannten Verfahren. Ein wesentlicher Vorteil des erfindungsgemäßen Systems ist in der unmittelbaren Erfassung von Schädigungsereignissen zu sehen.

Gleichzeitig ist dieser Sensor mit einer ebenfalls auf der zu überwachenden Struktur vorgesehenen Controller bzw. Funkeinheit verbunden. Diese Komponenten dienen der Datenübertragung auf ein zentrales Datenerfassungs- und Datenauswertungssystem. Die Einheit aus Sensor und Funkeinheit, hier auch intelligenter Sensor oder "edge sensor" genannt, ist vorzugsweise so ausgestaltet, dass ein Langzeitgebrauch möglich ist. Dazu kann diese Einheit mit einer Batterie zur ausreichend langen Energieversorgung ausgestattet sein. So können mehrjährige Einsatzzeiten gesichert werden.

Das zentrale Datenerfassungssystem kann ein Cloud basiertes System oder ein Application Server sein, so dass eine starke räumliche Trennung möglich ist und beispielsweise so optimal Rechnerkapazitäten ausgenutzt werden können. Gegebenenfalls können sogenannte Gate-Einrichtungen zwischengeschaltet sein, um so die Daten einer Vielzahl an Sensoren komplett an die Datenerfassungs- und Datenauswertungseinheit zu übermitteln. Das erfindungsgemäße System kann natürlich eine Vielzahl an derartigen Sensoren umfassen, so dass die Überwachung einer größeren Anlage möglich wird. Bei großen (weitläufigen) zu überwachenden Anlagen, bei denen ggf. nicht sichergestellt werden kann, dass die Daten von den einzelnen Sensoren sicher auf eine zentrale Einheit übertragen werden können (da die Entfernung für eine sichere drahtlose Übertragung zu weit ist), können einzelne Bereiche der Anlage mit individuellen Empfängern (Gateway-Installationen) ausgerüstet werden so dass auch weitläufige Anlagen sicher überwacht werden können. Es entstehen so aneinandergrenzende oder sich überlappende Bereiche in denen die individuellen Sensoren mit den jeweiligen Gateway-Installationen kommunizieren können, so dass alle gewonnen Daten sicher übermittelt werden können. Derartige Systeme werden erfindungsgemäß LORAWAN Systeme genannt, also "long range wide area network"-Systeme.

Derartige Überwachungssysteme umfassen also eine Vielzahl an Sensoren, die jeweils mit einer Funkeinheit zur drahtlosen Datenübertragung ausgestattet und formschlüssig mit den zu überwachenden Bauwerken/Hohlkörpern verbunden sind. Weiterhin umfasst ein derartiges System, abhängig von der Größe der Anlage mindestens eine Gateway-Installation zum Empfang der Daten (und Weiterleitung dieser, beispielsweise über LTE Netze oder 3G, 4G oder 5G Netze an eine zentrale Datenerfassungs- und Datenverarbeitungseinheit, die wie vorstehend ausgeführt als Cloud-System ausgestaltet wein kann), vorzugsweise über ein LoRaWAN System. Die Daten der mehreren Sensoreinheiten können so zentral verarbeitet werden. Da die Sensoren kontinuierlich die Daten erfassen und in geeigneter Weise kontinuierlich übermitteln, kann so die zentrale Datenerfassungs- und Datenverarbeitungseinheit kontinuierlich die empfangenen Daten verarbeiten, um aus den Rohdaten die für die Strukturüberwachung notwendigen Informationen herauszufiltern. Die in diesem Zusammenhang einzusetzenden Datenverarbeitungsprogramme sind dem Fachmann geläufig.

Derartige Funkeinheiten können bevorzugt so ausgestaltet sein, dass Daten sowohl gesendet als auch empfangen werden können. Bidirektionale (intelligente) Sensoren dieser Art können durch externen (remote) Zugriff mit Softwareupdates, Störungsüberprüfungsprogrammen und Störungsbehebungsprogrammen etc. versorgt werden, was Wartungsarbeiten etc. am Sensorsystem vereinfacht, da nicht für jede Überprüfung oder Störungsbeseitigung Wartungspersonal vor Ort sein muss. Der Sensor ist also ohne direkten menschlichen Eingriff aus der Ferne zertifizierbar, ein Vorteil gegenüber Systemen, bei denen eine Zertifizierung nur durch direkte manuelle Überprüfung vor Ort möglich ist.

Der Vorteil des erfindungsgemäßen Verfahrens und damit des erfindungsgemäßen Systems gegenüber klassischen Verfahren ist, dass sie prinzipiell jederzeit Anhaltspunkte über die Funktionsfähigkeit einer Komponente liefern können und/oder die Entstehung von Problemen in Echtzeit kontinuierlich verfolgen, so dass über eine geeignete Steuerung der Auswertung eine Alarmierungsfunktion sichergestellt werden kann. Je nach Verfahren der Datenauswertung lässt sich auch der Belastungszustand kontinuierlich beschreiben (im folgenden auch CMS, "condition monitoring system"). Aufgrund der kontinuierlichen Strukturüberwachung kann ein derartiges System im laufenden Betrieb einer Anlage also rechtzeitig auf entstehende Schwachstellen hinweisen, so dass Wartungsarbeiten und Reparaturen gezielter durchgeführt werden können. Da die Überwachung kontinuierlich im laufenden Betrieb erfolgt können so unerwünschte Stilstandzeiten vermieden werden. Dieses System kann auch derartig ausgestaltet sein, dass beispielsweise Warnhinweise bei sich abzeichnenden Schwach- oder Problemstellen automatisch an das für einen bestimmten Anlagenteil verantwortliche Personal übermittelt werden, so dass dann die notwendigen weiteren Schritte ohne Verzögerung eingeleitet werden können. Das System kann dabei auch in Ausgestaltungen automatisch die einzuleitenden Schritte vorschlagen und beispielsweise Materialbestellungen etc. vornehmen. Ein derartiges System kann so ausgestaltet sein, dass derartige Daten direkt in zusätzliche Systeme eingelesen werden, wie SCADA Anwendungen. SCADA steht dabei für "Supervisory Control And Data Acquisition", also die übergeordnete Steuerung und Datenerfassung. Jede Anwendung, die Betriebsdaten aus einem System erfasst, um dieses System zu steuern und zu optimieren, ist eine SCADA-Anwendung, eine Option ist, wie vorstehend ausgeführt eine Anwendung, die automatische Materialbestellungen vornimmt.

Weiterhin kann durch die gewonnenen Daten unter Einsatz geeigneter statistischer Methoden (die beispielsweise auf dem Application Server oder in dem Cloud basierten System laufen) neben der akuten Kontrolle/Überwachung auch eine Vorhersage (Prädiktion) zur Zustandsveränderung des überwachten Bauwerks erfolgen. Durch Einsatz geeigneter Algorithmen oder KI-Systemen können statistisch fundierte Berechnungen für die "Materialrestlaufzeit" (wie lange ist das überwachte Bauwerk noch innerhalb der vorgegebenen Werte als stabil zu betrachten, End-of-Life (EOL) Bestimmungen) durchgeführt werden. Damit kann bereits vor dem Eintreten eines (Störungs)Ereignisses vom System eine Warnung generiert werden, so dass erneut mit einem sehr guten zeitlichen Vorlauf Wartungs- und/oder Austauscharbeiten geplant werden können. Auch kann die gewonnene Datenhistorie mit anderen Daten, beispielsweise aus Werkstoffprüfungen anderer Art, der jeweiligen Anlagensteuerung oder anderen Daten aus dem Betrieb der überwachten Anlage kombiniert werden, um so weitere komplexere Datenauswertungen zu ermöglichen oder um detailliertere Daten für eine überwachte Anlage zu generieren (was erneut ggf. eine bessere und genauere Datenanalyse ermöglicht oder Daten für bislang nicht zu evaluierende Ereignisse/Situationen bereitstellt).

Auf diese Art und Weise kann ohne Abschalten der zu überwachenden Anlage kontinuierlich eine Überwachung stattfinden, ohne dass dafür Personal erforderlich ist, da die Sensoren und Funkeinheiten die Datengenerierung, Datenübermittlung und Datenerfassung und Auswertung selbstständig durchführen. In Übereinstimmung mit anwendungsspezifisch ausgewählten Voreinstellungen kann dann das System auf der Grundlage der empfangenen Daten kontinuierlich Zustandsberichte übermitteln, so dass notwendige Wartungs- bzw. Reparaturarbeiten rechtzeitig geplant und in Übereinstimmung beispielsweise mit üblichen Abschaltungen (für Reinigungsvorgänge oder bei der Umstellung auf andere Reaktionen/Materialien) durchgeführt werden können. Somit verringert sich insbesondere auch der Zeitaufwand für derartige Wartungen und Reparaturen, da diese besser geplant werden können. Durch die kontinuierliche Überwachung der Anlage werden darüber hinaus die wartungsrelevanten Strukturdaten kontinuierlich erfasst und ausgewertet, so dass häufig bereits weit im Voraus absehbar ist, wann spätestens Wartungs- und Reparaturarbeiten durchzuführen sind. Auch dies vereinfacht den Arbeitsablauf in derartigen Anlagen.

Durch den Einsatz des erfindungsgemäßen Systems, dass eine kontaktlose Datenübertragung umfasst, können darüber hinaus aufwendige Verkabelungen vermieden werden, die sowohl arbeitsintensiv als auch kostenaufwendig sind. Durch den Einsatz bekannter Sensortechniken können auch weitläufige Anlagen kontinuierlich überwacht werden, da die zum Einsatz kommenden Funkmodule eine sichere Datenübermittlung auch über Funkstrecken von mehreren Kilometern sicher ermöglichen. Gleichzeitig steigt dadurch die Arbeitssicherheit, da kein direkter menschlicher Eingriff mehr notwendig ist. Aufenthaltszeiten in gefährlichen Umgebungen werden so minimiert.

Es hat sich gezeigt, dass sich mit einem vorstehend beschriebenen System Bauteile und auch ganze Anlagen aus den hier beschriebenen Materialien und Werkstoffen, wie metallischen Werkstoffen, insbesondere Stahl sicher überwachen lassen. Dabei können Bauwerke/Hohlkörper mit unterschiedlichen Wandstärken und Durchmessern problemlos überwacht werden, beispielsweise Rohre, mit Wandstärken von einem Millimeter oder mehr, also beispielsweise einigen Millimetern oder Zentimetern und Durchmessern von einigen Zoll.

Das erfindungsgemäße System eignet sich zur Überwachung von kritischen Stellen einer Anlage/eines Bauteils, allerdings kann auch eine komplette Anlage überwacht werden. Hierfür ist lediglich erforderlich, dass eine ausreichende Anzahl an Sensoren auf der Anlage angebracht wird. Mit den Ultraschall- Sensoren ist es ausreichend bei einer Anlage die Sensoren so zu verteilen, dass der Abstand zwischen den einzelnen Sensoren im Bereich von 1 bis 5 Metern, bevorzugt 1 bis 3 Metern liegt. Darüber lässt sich eine vollständige kontinuierliche Strukturüberwachung (SHM und CMS) sicherstellen.

Im Hinblick auf die Einstellung der Sensoren hat sich gezeigt, dass die besten Ergebnisse erhalten werden, wenn nach Installation eine Kalibrierung erfolgt. Diese Kalibrierung zielt darauf ab, die Meßfrequenz zu finden, bei der das erhaltene Signal am stärksten ist. Dadurch können ausreichend starke und gut interpretierbare Signale erhalten werden, so dass die Strukturüberwachung mit ausgezeichneter Zuverlässigkeit betrieben werden kann.

Wie bereits ausgeführt erfolgt die Datenauswertung auf der Grundlage der übermittelten Rohdaten in einer zentralen Datenverarbeitungseinheit unter Einsatz einer analytischen Software zur Datenverarbeitung. Aufgrund der kontinuierlichen und automatischen Datenerfassung und Datenauswertung kann das System derart ausgestaltet werden, dass die ermittelten Zustandsinformationen automatisch an die intendierten Empfänger (Wartungspersonal, aber auch Datenablage/Datenspeicherung) übermittelt werden, beispielsweise durch drahtlose Übermittlung auf Endnutzergeräte (Smartphone/Tablet/Laptop etc.). Diese Datenübermittlung kann in gewünschten Formaten erfolgen, wie direkte Einspielung in Auswertungsprogramme, als Email mit Dateianhang zur individuellen Weiterbearbeitung etc. Letztendlich wird dadurch ein System zur Zustandsüberwachung bereitgestellt, das kontinuierlich, über einen langen Zeitraum und zerstörungsfrei Zustandsdaten generiert, diese automatisch und drahtlos und eine Datenerfassungs- und -auswertungseinheit übermittelt, und anschließend die Zustandsinformationen und ggf. auch Handlungsvorschläge (Wartungsintervalle, konkrete Wartungs- oder Reparaturarbeiten) übermittelt. Dadurch entsteht ein kommunizierendes System, in dem ein zu überwachendes Bauteil durch die Sensor- und Funkeinheit selbstständig und kontinuierlich Zustandsdaten übermittelt.

Die vorstehenden Ausführungen, die auf die Ausgestaltung des erfindungsgemäßen Systems abstellen sind für den Fachmann ohne weiteres auf das erfindungsgemäße Verfahren übertragbar. Dieses umfasst insbesondere die Anbringung der vorstehend beschriebenen Sensor- bzw. Funkeinheit. Die Übertragung von Signalen vom Sensor und auch die Übermittlung beispielsweise an mobile Endgeräte werden erfindungsgemäß durch im Prinzip bekannte Protokolle sichergestellt. Hier kann, je nach Einsatzsituation das System und auch das Verfahren einfach an die spezifischen Umstände angepasst werden. Dies ist ein weiterer Vorteil der vorliegenden Erfindung, da im Prinzip ein Baukastensystem zur Verfügung gestellt wird, das einfach adaptierbar ist, dabei gleichzeitig aber eine einfache und zuverlässige Zustandsüberwachung ermöglicht.

## Patentansprüche

1. System zur zerstörungsfreien Strukturüberwachung eines Bauwerks und/oder Hohlkörpers aus einem ferromagnetischem metallischen Werkstoff, umfassend mindestens eine Kombination aus einem intelligenten Sensor, der formschlüssig mit dem zu überwachenden Bauwerk und/oder Hohlkörper verbunden ist oder zumindest in der Nähe des zu überwachenden Bauwerks und/oder Hohlkörper vorgesehen ist, sowie einem mit dem Sensor verbundene Funkeinheit zur Übertragung der durch den Sensor gewonnenen Daten, **dadurch gekennzeichnet, dass** der intelligente Sensor ein Ultraschall-Laufzeitmessungssensor vom EMAT Typ ist.

2. Verfahren zur zerstörungsfreien Strukturüberwachung eines Bauwerks und/oder Hohlkörpers aus einem ferromagnetischem metallischen Werkstoff, umfassend die Übertragung von durch einen intelligenten Sensor, der formschlüssig mit dem zu überwachenden Bauwerk und/oder Hohlkörper verbunden ist oder zumindest in der Nähe des zu überwachenden Bauwerks und/oder Hohlkörper vorgesehen ist, gewonnenen Daten durch eine mit dem Sensor verbundene Funkeinheit, **dadurch gekennzeichnet, dass** der intelligente Sensor ein Ultraschall-Laufzeitmessungssensor vom EMAT Typ ist.

3. System nach Anspruch 1 oder Verfahren nach Anspruch 2, wobei der Prüfkopf des Sensors im Frequenzbereich von 4 bis 8 MHz arbeitet.

4. System oder Verfahren nach einem der Ansprüche 1 bis 3, wobei die Funkeinheit im Frequenzbereich von 850 bis 950 MHz, insbesondere 864 MHz oder 915 MHz arbeitet, wobei die Funkeinheit vorzugsweise eine Nahbereichsfunkeinheit gemäß ETSI EN 300 328 V1.7.1 ist.

5. System oder Verfahren nach einem der vorgehenden Ansprüche, wobei der Hohlkörper ein Reaktor oder Rohr aus Stahl ist.

6. System oder Verfahren nach einem der vorstehenden Ansprüche, die Temperatur des zu überwachenden Bauwerks/Hohlkörpers im Temperaturbereich von -40 bis 650 °C liegt, vorzugsweise im Temperaturbereich von 80 bis 120°C oder im Temperaturbereich von 200 bis 400°C liegt.

7. System oder Verfahren nach einem der vorstehenden Ansprüche, wobei zwischen Prüfkopf des Sensors und zu überwachendem Bauwerk und/oder Hohlkörper ein Abstand, vorzugsweise ein Luftspalt, von 10 mm oder weniger, bevorzugt 5 mm oder weniger vorgesehen ist.

8. System oder Verfahren nach einem der vorstehenden Ansprüche, wobei mehrere Bauwerke und/oder Hohlkörper simultan und autonom überwacht werden.

9. System oder Verfahren nach Anspruch 8, wobei die mehreren Bauwerke und/oder Hohlkörper Teil einer Anlage, beispielsweise in der chemischen Industrie, von Raffinerien, von Pipelines oder Offshore-Strukturen sind.

10. System oder Verfahren nach einem der vorstehenden Ansprüche, umfassend weiterhin mindestens eine Gateway-Installation, an die zunächst die Daten einer definierten Gruppe an Sensoren übermittelt werden.

11. System oder Verfahren nach einem der vorstehenden Ansprüche, umfassend weiterhin eine Datenerfassungseinheit, geeignet zum Empfang und zur Verarbeitung der von dem mindestens einen Sensor generierten Daten (mit oder ohne Zwischenschaltung einer Gateway-Installation).

12. System oder Verfahren nach Anspruch 11, wobei die Datenerfassungseinheit derart ausgestaltet ist, dass die aus der Datenverarbeitung abgeleiteten Strukturinformationen automatisch an mobile Endgeräte übermittelt werden

13. System oder Verfahren nach einem der Ansprüche 10 bis 12, wobei mehrere Gateway-Installationen vorgesehen sind, so dass sich aneinandergrenzende oder überlappende Überwachungsbereiche ergeben.

14. System oder Verfahren nach einem der vorstehenden Ansprüche, wobei die Kombination aus Sensor und Funkeinheit so ausgestaltet ist, dass sie über einen Zeitraum von mindestens 96 Monaten ohne externe Energiezufuhr aktiv sein kann.

15. System oder Verfahren nach einem der vorstehenden Ansprüche, wobei der Sensor, durch Verklebung oder Laminierung mit dem Hohlkörper formschlüssig verbunden ist oder wobei der Sensor magnetisch durch den im Sensor vorliegenden Permanentmagneten mit dem Hohlkörper verbunden ist.

16. System oder Verfahren nach einem der vorstehenden Ansprüche, wobei die Datenauswertung zum SHM und/oder zum CMS geeignet ist.

17. System oder Verfahren nach einem der vorstehenden Ansprüche, weiter umfassend Einrichtungen zur Web basierten ortsunabhängigen Visualisierung der Datenauswertung.

18. System oder Verfahren nach einem der vorstehenden Ansprüche, zur Verwendung im Zusammenhang einer online arbeitenden Prädiktion Maintenance.
